# EUROPEAN PATENT APPLICATION

(11) **EP 4 358 489 A1**
(43) Date of publication of application: **24.04.2024**
(21) Application number: 21946127.4
(22) Date of filing: 21.12.2021
(51) Int. Cl.: H04L 51/08, H04L 9/32

(54) **FILE TRANSFER SYSTEM**

(30) Priority: 17.06.2021 JP 2021100640
(71) Applicant: IMATRIX HOLDINGS CORP., Kawasaki-shi, Kanagawa 2160004 (JP)
(72) Inventor: KOJIMA, Mitsuo, Kawasaki-shi, Kanagawa 216-0004 (JP); TOMITA, Mamoru, Kawasaki-shi, Kanagawa 216-0004 (JP); NAKAHASHI, Akira, Kawasaki-shi, Kanagawa 216-0004 (JP); OKA, Hibiki, Kawasaki-shi, Kanagawa 216-0004 (JP)
(74) Representative: Viering, Jentschura & Partner mbB Patent- und Rechtsanwälte
(86) International application number: PCT/JP2021/047291
(87) International publication number: WO 2022/264457

(57) **Abstract**

Provided is a highly secure file transfer system.

[solving means]

A file transfer system 100 comprises a terminal 110 of a sender S, a storage server 120 for receiving an electronic mail M transmitted from the terminal 110 on a network NW1, an authentication server 120 and a file relay server 140 on a network NW2, and a terminal 160 of a receiver R on a network NW3. When the authentication server 130 authenticates the receiver R, the attached file F stored in the storage server 120 is transferred to the terminal 160 of the receiver R through the file relay server 140.

## Description

### TECHNICAL FIELD

The present invention relates to a file transfer system, and more particularly to a system for securely transferring a file attached to an electronic mail.

### BACKGROUND

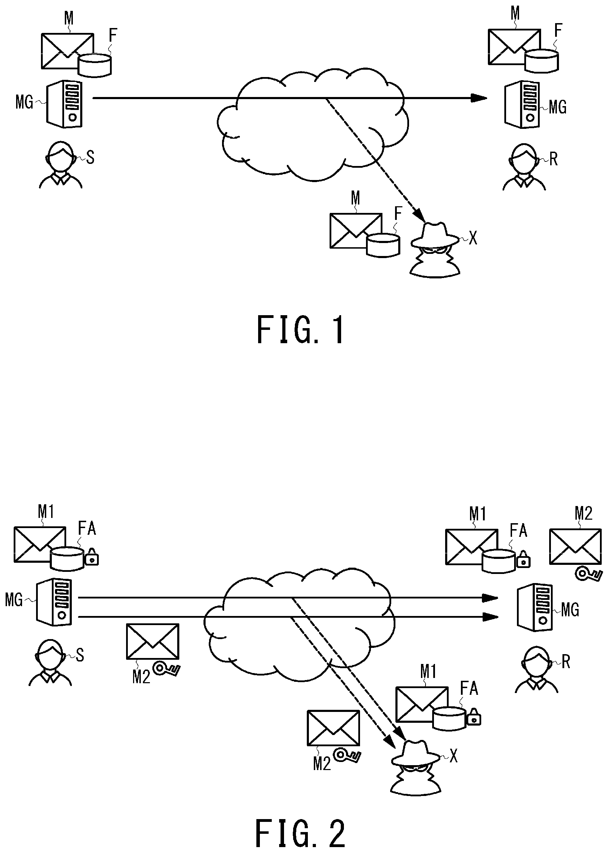

Computerization of information exchanged between companies and individuals is progressing. As shown in FIG. 1, a sender S attaches an electronic file F to an electronic mail M and transmits the electronic mail M to a receiver R via a mail gate MG and the Internet. If security is not provided, there is a possibility that the electronic mail M is eavesdropped by unauthorized access of the third party X on the transmission path. Further, if the electronic mail M is erroneously transmitted, the attached file F may be seen by an unintended receiver.

Therefore, as a security measure, a method of transmitting an e-mail M1 to which the encrypted file FA is attached to the receiver R and transmitting an e-mail M2 to which a password is written separately to the receiver R is utilized, as shown in FIG. 2. However, since this method also transmits the e-mails M1 and M2 on the same route, if the e-mails M1 and M2 are stolen by the unauthorized access of the third party X on the transmission path, the security is lost. In many cases, the password transmission is automated by the system, thus it is meaningless from the viewpoint of preventing erroneous transmission. In addition, encrypting files makes it impossible to scan for malware, which may be exploited by spammers (EMOTET, IceDiD). The operation of sending the encrypted file FA and the password through the same path does not contribute to the improvement of confidentiality of the file, and also increases the risk of the receiver R being affected by malware.

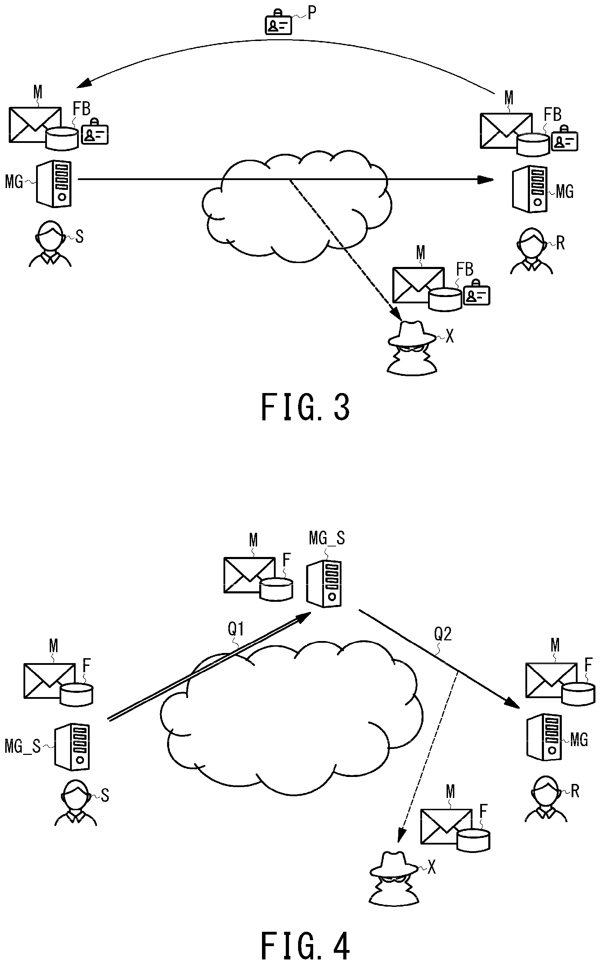

There is also a method using a public key cryptosystem instead of sending a password. In this method, as shown in FIG. 3, the receiver R passes the public key P to the sender S in advance, and the sender S encrypts the file using the public key P and transmits the electronic mail M with the encrypted file FB attached thereto to the receiver R. Upon receiving the electronic mail M, the receiver R can decrypt the encrypted file FB with the secret key Pr. Even if the electronic mail M is stolen by the unauthorized access of the third party X on the transmission path, the encrypted file FB cannot be decrypted, so that the method has higher security. However, in this method, it is necessary to give the public key P in advance, the cost of key generation and key management is high, and further, when the mailer itself does not support it, the operations of encryption and decryption become complicated. There is also the problem that encryption makes malware scanning impossible.

In addition, there is a method of preventing eavesdropping of e-mails and attached files by encrypting communication paths. For example, as shown in FIG. 4, since the mail gateway MG_S supports encryption, the data between the communication paths Q1 is encrypted, but since the mail gateway MG does not support encryption, the data on the communication path Q2 is not encrypted. It is not easy to make all the mail gateways (mail servers) correspond to encryption and attempt to encrypt all the communication paths, thus there is a possibility that the electronic mail M is eavesdropped by unauthorized access by the third party X on the vulnerable communication path Q2.

Further, the electronic mail system of Patent Document 1 separates an attached file from an electronic mail, stores the separated attached file in a file transfer server, and transmits an electronic mail to which information including a storage address on the file transfer server is added to a receiver, thus the security is improve by separating the transmission path for the electronic mail from the transmission path for the attached file.

### PRIOR ART DOCUMENTS

### PATENT DOCUMENTS

Japanese Patent Application Laid-Open No. 2006-180085

### SUMMARY OF THE INVENTION

### PROBLEMS TO BE SOLVED BY THE INVENTION

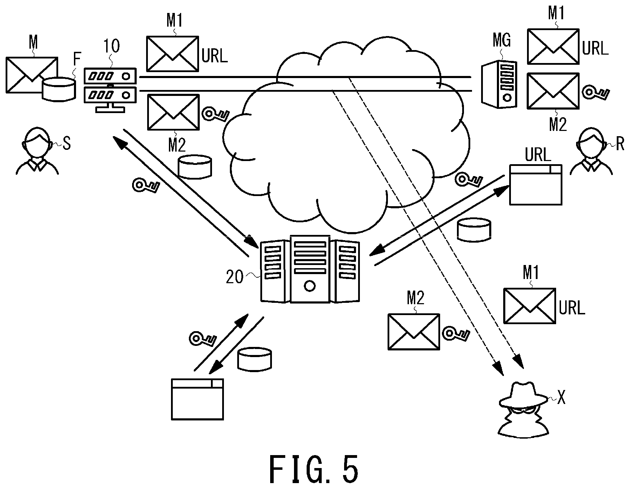

As disclosed in Patent Document 1, a conventional file sharing system uses an external storage service, and an example of its configuration is shown in FIG. 5. When the sender S transmits the electronic mail M, the product 10 having security measures extracts the attached file F from the electronic mail M to transmit and store the file F to the file sharing server 20 shared on the external Internet. The file sharing server 20 returns the password to the product 10. The product 10 transmits an e-mail M1 describing the URL of the file sharing server 20 and an e-mail M2 describing the password for accessing the file sharing server 20 to the receiver R. The receiver R receives the e-mails M1 and M2 via the mail gate MG, accesses the URL by using the password described therein, and downloads the file F stored in the file sharing server 20.

In the above-described file sharing system, since e-mails M1 and M2 containing the URL and the password are transmitted through the same path, there is a possibility that the e-mails M1 and M2 may be eavesdropped by unauthorized access by the third party X. Also, there is a case where the URL and the password are described in the same e-mail, if the e-mail is eavesdropped by the third party X, the file F would be illegally downloaded similarly. Furthermore, if an e-mail containing a URL is stolen, the URL may be rewritten as a phishing URL and exploited. In addition, since the file sharing server exists on the Internet and an external user can directly access the server, an opportunity to attempt unauthorized access could be given.

It is an object of the present invention to solve such conventional problems and to provide a file transfer system with high security.

### MEANS FOR SOLVING THE PROBLEMS

A file transfer system according to the present invention comprises a function of transferring a file attached to an electronic mail, and comprises a sender side terminal for generating an electronic mail for transmitting to a destination address; a receiver side terminal for receiving an electronic mail generated by the sender side terminal; a first server for receiving the electronic mail from the sender side terminal, the first server identifying the presence or absence of an attached file of the electronic mail, storing the attached file if there is the attached file, and transmitting the electronic mail with the attached file separated to the receiver side terminal; a second server for performing a second transfer request of the attached file to the first server in response to a first transfer request of the attached file from the receiver side terminal; and a third server for receiving the attached file provided from the first server in response to the second transfer request from the second server and for transmitting the attached file to the receiver side terminal in response to a reception request from the receiver side terminal.

In one aspect, the second server notifies the first server of the second transfer request when the receiver side terminal is authenticated, and notifies the first server that the receiver side terminal is not authenticated when the receiver side terminal cannot be authenticated. In one aspect, when the first server receives the notification that the receiver side terminal is not authenticated, the first server transmits an electronic mail containing a one time token for registration to the receiver side terminal. In one aspect, when the destination address of the electronic mail received from the sender side terminal is not registered in the destination list, the first server transmits an electronic mail including the one time token for registration to the receiver side terminal. In one aspect, the third server temporarily retains the attached file received from the first server in a dynamic memory without storing the attached file in a non-volatile storage medium. In one aspect, the first server exists in a first network common to the sender side terminal, the second server and the third server exist in a second network different from the first network, and the receiver side terminal exists in a third network. In one aspect, the first server permits access of only the second server with respect to access from outside the first network. In one aspect, the third server permits access of only the first server with respect to access from outside the second network. In one aspect, the receiver side terminal includes a common interface for accessing the second server and the third server, and wherein the common interface enables to input authentication information for logging in to the second server and the third server. In one aspect, communication between the first server, the second server, and the third server is HTTPS, communication between the second server and the third server and the receiver side terminal is HTTPS, and communication between the first server and the receiver side terminal is SMTP.

A file transfer system according to the another present invention comprises a function of transferring a file attached to an electronic mail, and comprises a sender side terminal for generating an electronic mail for transmitting to a destination address; a receiver side terminal for receiving an electronic mail generated by the sender side terminal; a first server for receiving an electronic mail from the sender side terminal, the first server storing the electronic mail as a mail file having the same extension as the electronic mail, and outputting a transmission notification indicating that the electronic mail has been transmitted to the receiver side terminal; and a second server for receiving the transmission notification and for requesting the first server to transfer the mail file when receiving a reception request of the electronic mail from the receiver side terminal, wherein the second server transmits the mail file received from the first server to the receiver side terminal as an electronic mail.

In one aspect, when a file is attached to the electronic mail from the sender side terminal, the first server saves the electronic mail including the attached file as a single mail file. In one aspect, wherein the receiver side terminal performs the reception request of the electronic mail to the second server at a predetermined time interval by a polling function, and wherein when the second server receives the reception request from the receiver side terminal, the second server requests the first server to transfer the mail file in a state in which the reception request is made to wait, and transmits the mail file received from the first server as the response to the reception request made to wait. In one aspect, the communication between the receiver side terminal and the second server is POP3 or POP3S. In one aspect, the receiver side terminal takes the mail file received from the second server into a mailer and reads the mail file as an electronic mail. In one aspect, the second server makes the transfer request of the mail file to the first server by SMTP. In one aspect, the transmission notification from the first server to the second server and the transfer of the mail file from the first server to the second server are performed by HTTPS. In one aspect, the second server temporarily stores the mail file in a dynamic memory without storing the mail file in a non-volatile storage medium.

### EFFECT OF THE INVENTION

According to the present invention, the file attached to the electronic mail is stored in the first server, and when a transfer request of the attached file is received from the second server, the first server transmits the attached file to the receiving side terminal through the third server, so even if the second server and the third server are illegally accessed by a third person, leakage of the attached file can be prevented. Further, in the present invention, since security is ensured by encrypting the communication path without encrypting the file itself, malware scanning of the file is effective, and damage by encrypted malware which has been a problem in the conventional method can also be prevented.

Further, according to the present invention, an electronic mail including an attached file is stored in the first server as a mail file having the same extension as the electronic mail, and when a transfer request of the mail file is made from the second server, the first server transmits the mail file to the receiving side terminal through the third server, so that even if the second server and the third server are illegally accessed by a third person, leakage of the mail file can be prevented. Further, in the present invention, since the security is ensured by encrypting the communication path without encrypting the file itself, the malware scanning to the attached file, the spam inspection to the mail file, and the inspection of the URL described in the mail are effective, and damage by the encrypted malware and the spam mail can be prevented.

### BRIEF DESCRIPTION OF THE DRAWINGS

FIG. 1 is a diagram showing an example of a conventional file transfer without security measures.
FIG. 2 is a diagram showing an example of a conventional file transfer with security measures.
FIG. 3 is a diagram showing an example of a conventional file transfer with security measures.
FIG. 4 is a diagram showing an example of a conventional file transfer with security measures.
FIG. 5 is a diagram showing an example of a conventional file transfer with security measures.
FIG. 6 is a diagram showing a configuration of a file transfer system according to an embodiment of the present invention.
FIG. 7 is a block diagram showing the functional configuration of a storage server according to a first embodiment of the present invention.
FIG. 8 is a diagram showing an example of a destination list.
FIG. 9 is a flow illustrating a method for authenticating a receiver according to a first embodiment of the present invention.
FIG. 10 is a flow illustrating a file transfer operation according to a first embodiment of the present invention.
FIG. 11 is a diagram showing a variation of a file transfer system according to a first embodiment of the present invention.
FIG. 12 is a diagram showing a variation of a file transfer system according to a first embodiment of the present invention.
FIG. 13 is a diagram showing a configuration of a file transfer system according to a second embodiment of the present invention.
FIG. 14 is a block diagram showing the functional configuration of a storage server according to a second embodiment of the present invention.
FIG. 15 is a flow illustrating a file transfer operation according to a second embodiment of the present invention.
FIG. 16 is a flow illustrating a file transfer operation according to a third embodiment of the present invention.

### MODE FOR CARRYING OUT THE INVENTION

Next, the file transfer system according to the present invention enables to transmit a file attached to an electronic mail in safe to a receiver when the electronic mail is transmitted via the Internet. Further, the file transfer system according to the present invention enables to easily take in a file attached to an electronic mail into a mailer at a receiver side terminal.

### EMBODIMENTS

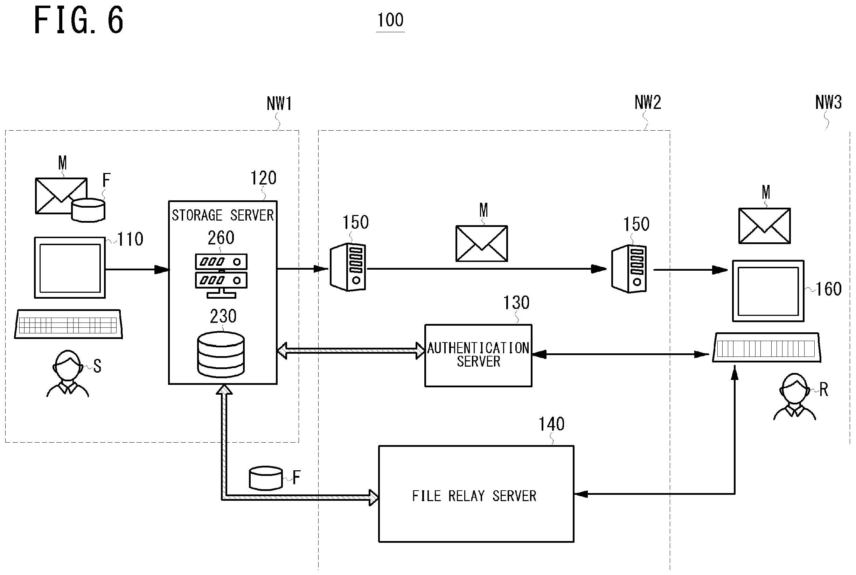

Next, an embodiment of the present invention will be described in detail. FIG. 6 is a diagram showing the overall configuration of a file transfer system according to an embodiment of the present invention. The file transfer system 100 of the present embodiment transmits an electronic mail via a path using an ordinary SMTP protocol and transmits an attached file via another encrypted path, and an example in which a sender S transmits an electronic mail with an attached file to a receiver R is shown here.

The file transfer system 100 includes a terminal 110 of the sender S, a storage server 120 existing in the same network NW1 as the terminal 110, an authentication server 130 existing in the network NW2 such as the Internet, a file relay server 140, a mail server 150, and a terminal 160 of the receiver R existing in the network NW3.

The terminal 110 of the sender side S and the terminal 160 of the receiver side R are not particularly limited, but may be, for example, a computer device, a high-functional portable terminal (for example, a smartphone), a laptop computer, or the like. Terminals 110 and 160 include a controller, a memory, a communication module, a user input unit, a display, and the like, and the controller can execute software stored in the memory. The terminals 110 and 160 are equipped with at least mail software capable of creating electronic mail and transmitting and receiving electronic mail.

The storage server 120 exists in the network NW 1 managed by the sender S and is connected to the terminal 110 of the sender S. The network NW1 is, for example, an intra-network or a local area network. Only the sender S or authorized users and systems can access the storage server 120, and external users such as the receiver R cannot access the storage server 120. The location of the storage server 120 is not limited and may be inside the network or in the cloud.

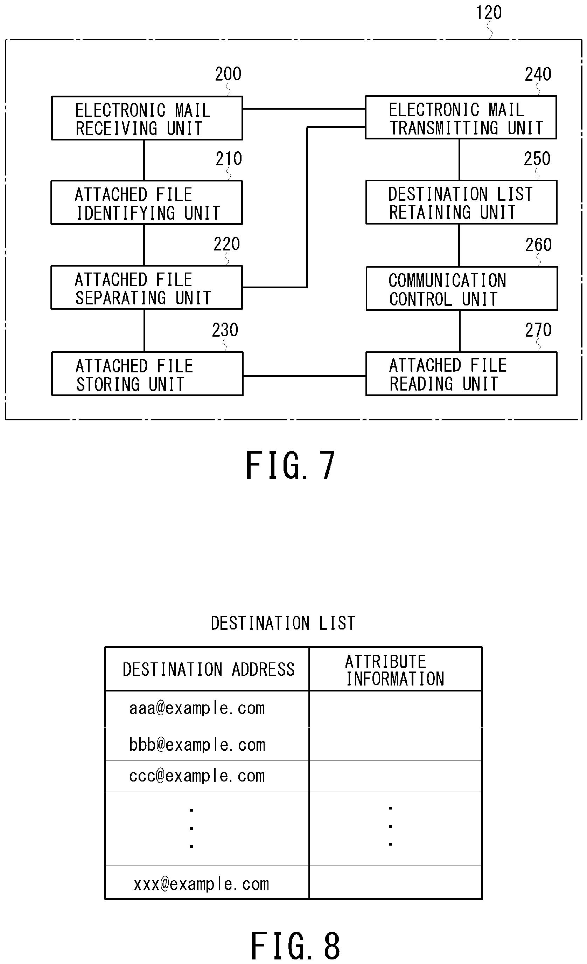

The storage server 120 includes hardware resources such as a controller, memory, and communication modules, and the controller is capable of executing software stored in the memory. FIG. 7 is a block diagram showing the functional configuration of the storage server 120. The storage server 120 includes an electronic mail receiving unit 200 which receives an electronic mail from a terminal 110 of a sender S, an attached file identifying unit 210 which identifies the presence or absence of an attached file of the received electronic mail, an attached file separating unit 220 which separates the attached file from the electronic mail when the attached file is identified, an attached file storing unit 230 which stores the separated attached file, an electronic mail transmitting unit 240 which transmits an electronic mail to a mail server 150, a destination list retaining unit 250, a communication control unit 260 which communicates with an external server, and an attached file reading unit 270 which reads the attached file stored in the attached file storing unit 230. These functions are implemented using hardware resources and software resources.

The electronic mail receiving unit 200 receives an electronic mail transmitted from the terminal 110 of the sender S. The attached file identifying unit 210 checks the descriptions of the mail header of the electronic mail received by the electronic mail receiving unit 200 to identify the presence or absence of an attached file. Specifically, when Content Type field of the mail header indicates multipart / mixed, it is determined that there is an attached file.

When the attached file identifying unit 210 identifies the attachment file, the attached file separating unit 220 separates the attached file from the electronic mail, provides the separated electronic mail to the electronic mail transmitting unit 240, and provides the separated attachment file to the attached file storing unit 230.

The attached file storing unit 230 stores the attached file in a storage medium such as a hard disk or a nonvolatile memory. The stored attached file is read by the attached file reading unit 270.

When a file is attached to the electronic mail of the sender S, the electronic mail transmitting unit 240 transmits the electronic mail with the attached file separated to the mail server 150, and when no file is attached to the electronic mail of the sender S, the electronic mail transmitting unit 240 transmits the electronic mail to the mail server 150.

The destination list retaining unit 250 retains information relating to past the destinations. As shown in FIG. 8, the information relating to the destinations may include at least the destination address and attribute information such as the name of the sender in addition to the destination address. It should be noted that the destinations retained in the destination list retaining unit 250 is an authenticated destinations.

The communication control unit 260 enables to communicate with the authentication server 130 and the file relay server 140. However, the storage server 120 permits access only by the authentication server 130 with respect to the access other than the same network, thereby eliminating unauthorized access by a third person on the Internet.

When the electronic mail receiving unit 200 receives an electronic mail, the communication control unit 260 determines whether or not the destination is an authenticated destination. Specifically, it is matched whether the destination address described in the mail header of the electronic mail or the destination address described in the envelope information exchanged in the process of the SMTP protocol communication is registered in the destination list retaining unit 250. If no matching destination is found, the communication control unit 260 performs authentication of the destination or sender.

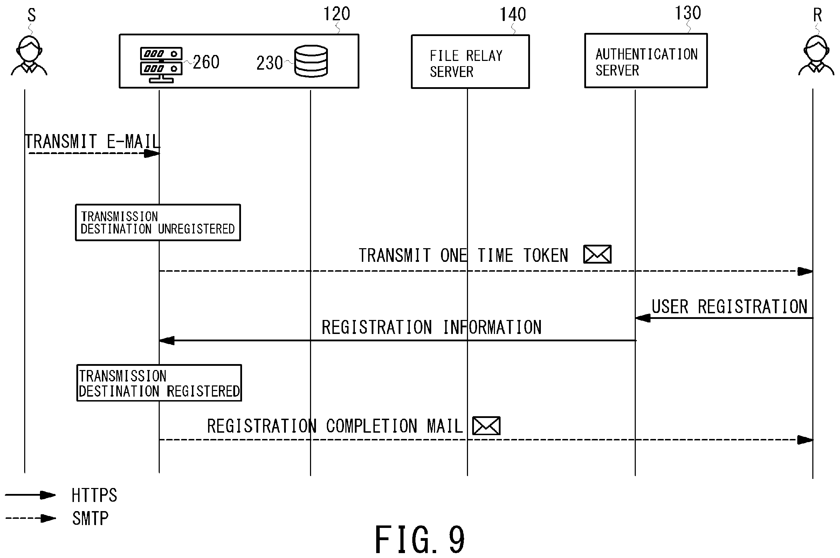

FIG. 9 is a flow showing an example of the authentication process. Here, it is assumed that the receiver R is an unregistered transmission destination. When the sender S transmits an electronic mail to the receiver R, the storage server 120 receives the electronic mail and checks whether or not the receiver R (the destination) is unregistered. If it is not registered, the communication control unit 260 makes the electronic mail transmitting unit 240 transmit an electronic mail containing a one time token for registration to the receiver R via a path using the SMTP protocol (dashed line in the figure). The receiver R accesses the authentication server 130 by using the URL shown in the one time token for registration through a path using the HTTPS protocol (solid line in the figure) to register the user. In the user registration, for example, authentication information such as a mail address and/or a password of the receiver R is set. After the user registration, the receiver R can log in to the authentication server 130 by inputting authentication information.

After the user registration of the receiver R is performed, the authentication server 130 transmits the registration information to the storage server 120. Upon receiving the registration information, the communication control unit 260 causes the destination list retaining unit 250 to register the destination of the receiver R. After completion of the registration, the communication control unit 260 transmits a registration completion mail to the receiver R via the electronic mail transmitting unit 240.

Although the above described authentication method is performed by determining whether or not the destination is unregistered by the storage server 120, besides this, if the authentication server 130 cannot authenticate the terminal 160 at the time of access from the terminal 160 of the receiver R, it is notified to the storage server 120, and the storage server 120 can transmit an electronic mail containing a one time token for registration to the receiver R.

Further, the above described authentication method is an example, and the present invention is not limited thereto. Two factor authentication or two step authentication may be performed as a higher level authentication. For example, the authentication number is sent to the portable terminal or the like of the receiver R by a short message, and the user registration is performed if the authentication number inputted from the URL by the receiver R is correct. Alternatively, instead of the short message, the authentication number may be sent to another company's mail address. Alternatively, the authentication number may be sent to an SNS account or an instant messaging account. Alternatively, authentication using a time-based one time password may be used.

Upon receiving the file request authentication information from the authentication server 130, the communication control unit 260 approves and specifies the destination of the attached file based on the file request authentication information. The file request authentication information includes information concerning a destination of an attached file and the like. The communication control unit 260 compares the destination stored in the destination list retaining unit 250 with the destination of the attached file contained in the file request authentication information, and approves the file request if the destination matches. When approving the file request, the communication control unit 260 reads the corresponding attached file from the attached file storing unit 230 through the attached file reading unit 270 to transmit the read attached file to the file relay server 140. Details of the file transfer operation will be described later.

Although one storage server 120 is illustrated in FIG. 6, a plurality of storage servers may be provided in the network NW1, and the sender S may select one from the plurality of storage servers. Although the mail server 150 is provided separately from the storage server 120 in the example of FIG. 6, the storage server 120 may configure to include the mail server 150.

The authentication server 130 exists in the network NW2 on the Internet, and the receiver R can designate the URL of the authentication server 130 from the browser of the terminal 160 to access it. In addition to the function of authenticating the receiver R as described above, the authentication server 130 includes a function of relaying communication between the receiver R and the storage server 120.

The file relay server 140 exists in the network NW2 on the Internet, and only the storage server 120 managed by the sender S is allowed to connect to an access from a network other than the same network. The file relay server 140 receives the attached file transmitted from the storage server 120, and transfers the received attached file to the terminal 160 of the receiver R. The file relay server 140 only relays the attached file between the storage server 120 and the terminal 160 of the receiver R, and in a preferred embodiment, the file relay server 140 does not store the received attached file in a non-volatile storage area but temporarily stores the received attached file in a volatile dynamic memory such as DRAM, and promptly erases the attached file retained in the dynamic memory after transferring the attached file. Thus, it is possible to prevent the attached file retained in the file relay server 140 on the Internet from being leaked by an unauthorized access by a third party.

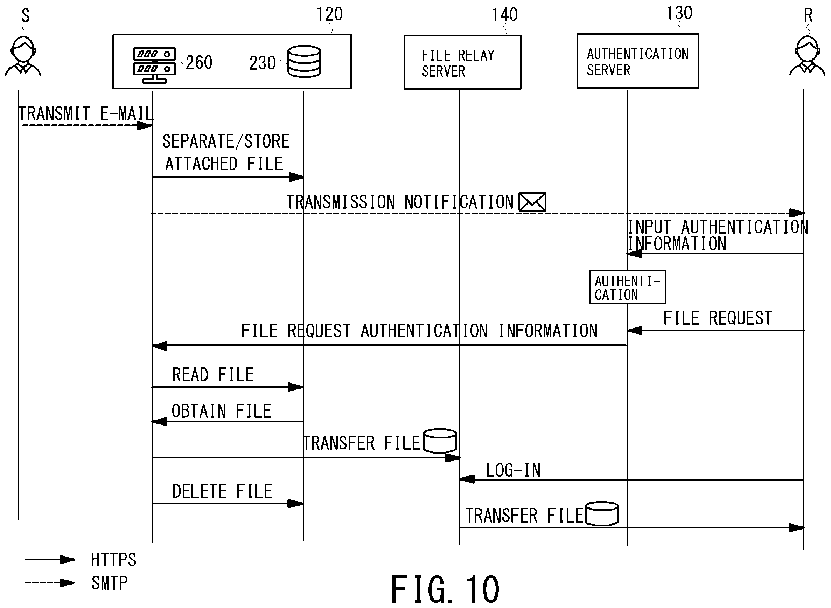

Next, a specific operation of transferring an attached file will be described with reference to the flow of FIG. 10. When the sender S transmits an electronic mail, the electronic mail is received by the electronic mail receiving unit 200 of the storage server 120. The attached file identifying unit 210 identifies the presence or absence of an attached file, and if there is an attached file, the attached file separating unit 220 separates the attached file from the electronic mail, and the attached file storing unit 230 stores the separated attached file. If there is no attached file, the electronic mail received by the electronic mail receiving unit 200 is provided to the electronic mail transmitting unit 240 as it is, and if there is an attached file, the electronic mail separated by the attached file separating unit 220 is provided to the electronic mail transmitting unit 240.

The communication control unit 260 transmits the electronic mail held in the electronic mail transmission unit 240 to the receiver R after confirming that the destination of the electronic mail has been registered in the destination list, The electronic mail is transmitted by SMTP via the mail server 150. The receiver R who has received the electronic mail recognizes that there is the attached file by receiving the electronic mail.

The receiver R accesses the authentication server 130 via the terminal 160, inputs authentication information, and logs into the authentication server 130. The authentication information is the mail address and the password of the receiver R set at the time of user registration. After logging in, the receiver R makes a request for the attached file to the authentication server 130.

In response to the file request from the receiver R, the authentication server 130 transmits a file request authentication information to the storage server 120 via HTTPS. The file request authentication information includes a request for the attached file and authentication information of the receiver R.

Upon receiving the file request authentication information, the communication control unit 260 of the storage server 120 confirms that the authentication information (mail address of the receiver R) contained therein is included in the list of the destination list retaining unit 250, reads the attached file of the receiver R from the attached file storing unit 230 through the attached file reading unit 270, and transfers the read attached file to the file relay server 140 via HTTPS. After transferring the attached file, the communication control unit 260 deletes the attached file from the attached file storing unit 230 through the attached file reading unit 270.

The receiver R logs into the file relay server 140 in order to download the attached file stored in the file relay server 140. In a preferred embodiment, the file relay server 140 permits the login of the receiver R using the same authentication information as that of the authentication server 130. In this case, the authentication server 130 and the file relay server 140 share the authentication information set by the receiver R, and the terminal 160 of the receiver R logs into the authentication server 130 and the file relay server 140 by using an interface common to the authentication server 130 and the file relay server 140.

The file relay server 140 transfers the attached file to the account of the receiver R, and the receiver R downloads the attached file from the browser of the terminal 160.

As described above, according to the file transfer system of the present embodiment, since there is no server for storing or sharing attached files on the Internet, the risk of leakage of attached files on the Internet can be reduced as much as possible. Even if the file relay server 140 is illegally accessed by a third party, it is virtually impossible for the third party to copy or download the attached file from the dynamic memory because the attached file is retained in a dynamic memory such as a DRAM.

Further, in the file transfer system of the present embodiment, by limiting access to the authentication server 130 and the file relay server 140 on the Internet to the storage server 120, the risk that the authentication server 130 and the file relay server 140 are accessed by an unspecified third person can be reduced.

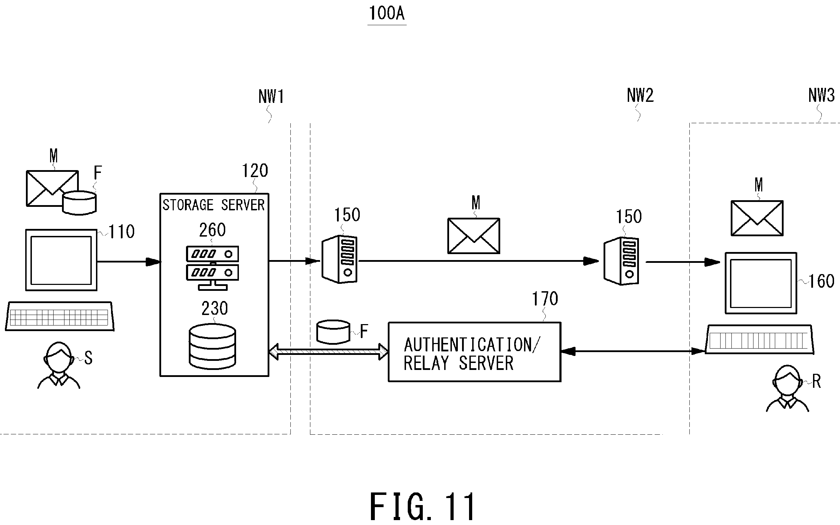

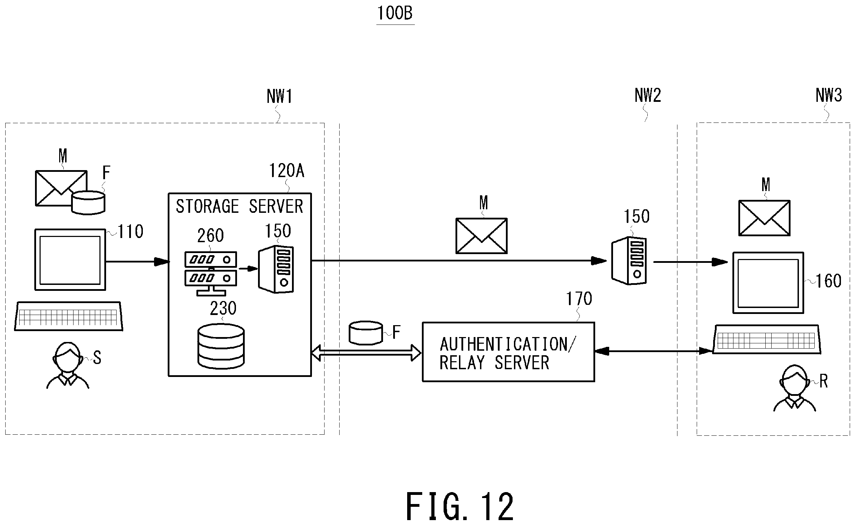

In the above embodiment, the authentication server 130 and the file relay server 140 are physically separated, but as shown in FIG. 11, the authentication/relay server 170 including these two functions may be disposed on the network NW2. The operation of the authentication/relay server 170 is substantially the same as that of the above described embodiment. Further, as shown in FIG. 12, the storage server 120A may be configured to include the mail server 150.

Next, a second embodiment of the present invention will be described. In the above embodiment, the attached file is separated from the electronic mail and transmitted, but in this embodiment, the electronic mail itself including the attached file is handled as one file, only the notification of the transmission fact of the electronic mail is transmitted through a path using the normal SMTP protocol, and the electronic mail file with the attached file is transmitted to the destination by another encrypted method.

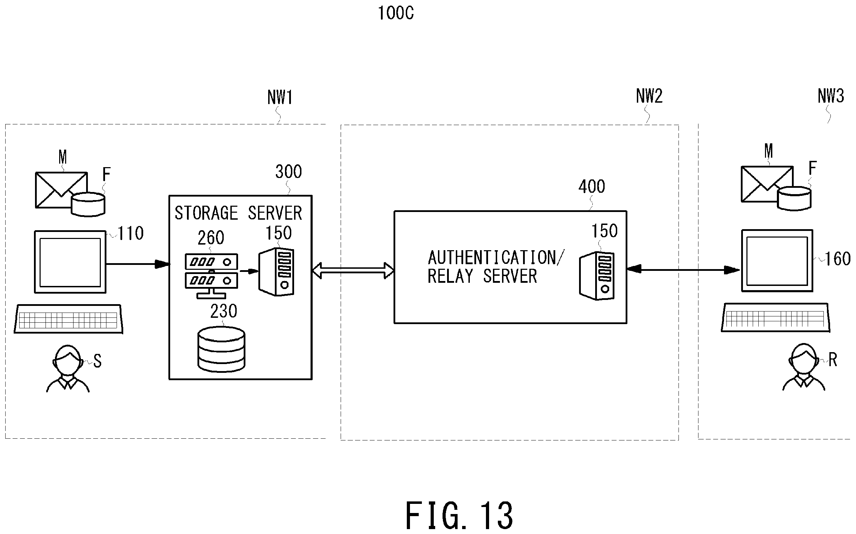

FIG. 13 is a diagram showing a configuration of a file transfer system according to a second embodiment of the present invention. The file transfer system 100C of the present embodiment includes a terminal 110 of the sender S, a storage server 300, an authentication/relay server 400, and a terminal 160 of the receiver R. The storage server 300 includes a mail server 150 and includes a path using the HTTPS protocol and a path using the SMTP protocol. The authentication/relay server 400 also includes a mail server 150 and includes a path using the HTTPS protocol and a path using the SMTP/POP3 protocol.

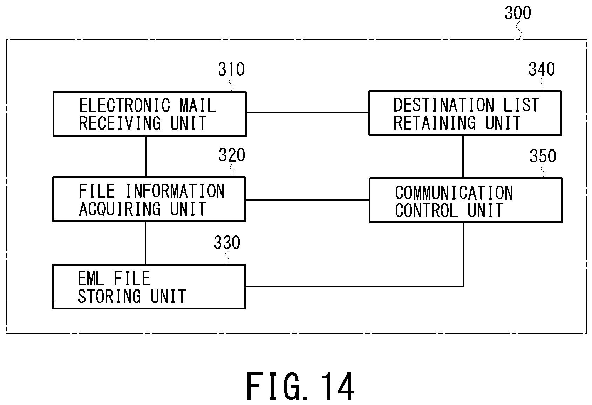

FIG. 14 is a block diagram showing the functional configuration of the storage server 300 of the second embodiment. The storage server 300 includes an electronic mail receiving unit 310, an information acquiring unit 320, an eml file storing unit 330, a destination list retaining unit 340, and a communication control unit 350.

The electronic mail receiving unit 310 receives an electronic mail from the sender S. It is assumed that eml is used as a file format of ordinary electronic mail, and electronic mail from sender S is in eml file format. In this embodiment, unlike the case of the first embodiment, the attached file is not separated from the electronic mail, and the received electronic mail is handled as a single file regardless of presence or absence of the attached file.

The information acquiring unit 320 refers to the mail header of the received electronic file, and acquires the destination of the electronic mail (the mail address and/or name of the receiver R), the sender (the mail address and/or name of the sender S), the subject of the electronic mail, and the format and file name of an attached file when there is the attached file. The information acquired by the information acquiring unit 320 is notified together with the notification of an electronic mail transmission to the authentication/relay server 400 through the communication control unit 350.

The eml file storing unit 330 stores the electronic mail received by the electronic mail receiving unit 310 with the extension eml. If an attached file exists, the electronic mail and the attached file are saved as a single file with the extension eml. If there is no attached file, the received electronic mail is stored as it is.

The destination list retaining unit 340 retains a destination list, and this list is used to approve the destination. If the destination is not registered in the list (if it is the first destination), the receiver R is authenticated, and its destination is registered in the list. This authentication method is performed in the same manner as in the first embodiment.

The communication control unit 350 can access the authentication/relay server 400 using the HTTPS protocol, and can access the mail server 150 of the authentication/relay server 400 using the SMTP protocol via the mail server 150. As described later, the communication control unit 350 transfers the eml file stored in the eml file storing unit 330 to the authentication/relay server 400, and the receiver R receives the eml file transferred to the authentication/relay server 400 using the POP3S protocol.

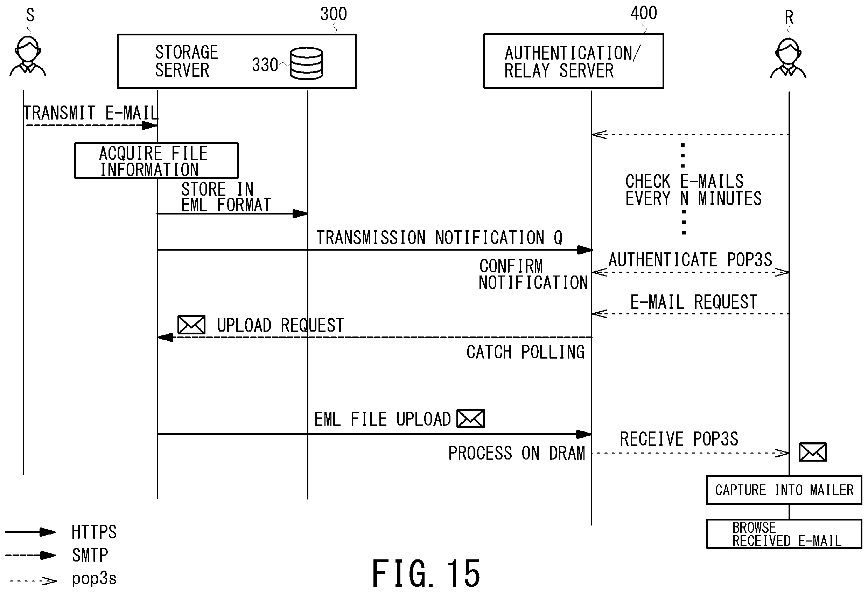

Next, the operation of the file transfer system according to the second embodiment will be described with reference to the flow of FIG. 15. In the figure, a solid line represents HTTPS protocol communication, a dashed line represents SMTP protocol communication, and a dotted line represents POP3S protocol communication.

First, the sender S creates an electronic mail to the receiver R by a mailer installed in the terminal 110, and when the electronic mail is transmitted, the electronic mail receiving unit 310 of the storage server 300 functioning as a mail gateway receives the electronic mail. Only the sender S or authorized users and system s can access the storage server 300, and external users such as the receiver R cannot access it.

When the electronic mail is received, the file information acquiring unit 310 refers to the mail header to acquire file information such as the destination, sender, subject, format and name of the attached file of the electronic mail. The acquired file information is provided to the communication control unit 340.

After the acquisition of the file information, the eml file storing unit 320 stores the electronic mail in a non-volatile medium in a file format with the extension of eml. When an attached file is included, it is stored as a single file including the attached file.

Next, the communication control unit 340 transmits a notification Q of the electronic mail transmission generated based on the file information acquired by the file information acquiring unit 310 to the authentication/relay server 400 in order to inform that the electronic mail has been transmitted. This transmission takes place over the HTTPS protocol. At this point, the electronic mail itself is being stored in the eml file storing unit 330, and is not transmitted to the authentication/relay server 400.

The mailer installed on the terminal 160 of the receiver R registers the mail server 150 of the authentication/relay server 400 as a POP3S sender. The mailer of the terminal 160 has a function of accessing the authentication/relay server 400 every N minutes and checking whether or not an electronic mail is received.

The authentication/relay server 400 receives the notification Q for the electronic mail transmission from the storage server 300, it confirms the authentication information from the terminal 160 of the receiver R, and authenticates the POP3S. If the authentication cannot be confirmed, a notification is returned to the storage server 300 on the assumption that the receiver R is the party to be transmitted for the first time. The storage server 300 or the sender S notifies the receiver R of the fact that the mail is transmitted through the secure path and the guidance of how to receive the mail. Then, the receiver R, who is the first user, performs user registration with the authentication/relay server 400, sets a login ID and a password, and sets the authentication/relay server 400 as a destination for the reception confirmation of the mailer. Once set, authentication and reception can be performed automatically from the next time onward. In addition to the authentication method described above, the authentication/relay server 400 may transmit a user registration guide to the receiver R.

If the authentication of the POP3S of the receiver R can be confirmed, the authentication/relay server 400 detects the reception confirmation and waits for polling because the reception confirmation issued by the mailer of the receiver R has been sent to the authentication/relay server 400. In the conventional method, if no electronic mail has arrived at the time of polling, the reception confirmation is terminated, and after a certain interval, the reception confirmation is performed again. The reception confirmation interval depends on the setting of the receiver's mailer. On the other hand, in the present embodiment, in order to minimize the time for the authentication/relay server 400 to retain the electronic mail, polling for the reception confirmation is made to wait, so that when the authentication/relay server 400 subsequently receives the electronic mail from the storage server 300, the electronic mail can be quickly delivered to the receiver R.

The authentication/relay server 400 receives polling for a mail request from the receiver R after authenticating the receiver R, then the authentication/relay server 400 requests the storage server 300 to upload an eml file while waiting for the polling. This request is made using the SMTP protocol.

In response to the upload request, the communication control unit 350 of the storage server 300 reads the corresponding eml file from the eml file storing unit 330 and uploads the read eml file to the authentication/relay server 400. This transfer is done over the HTTPS protocol.

When the eml file reaches the authentication/relay server 400, the polling which has been made to wait confirms the reception of the eml file, and the eml file is passed to the mailer of the terminal 160 of the receiver R by the POP3S protocol. The authentication/relay server 400 holds the eml file in a dynamic memory such as a DRAM or a cache memory, does not store it in a hard disk or a non-volatile memory, and after transferring the eml file to the receiver R, the eml file held in the dynamic memory is erased (cleared).

The receiver R confirms that the eml file has been received in the mailer used by the receiver R, and views the eml file. The receiver R can receive the eml file in the same manner as receiving an ordinary electronic mail without being aware of the presence of the storage server 300 or the authentication/relay server 400.

As described above, in this embodiment, an electronic mail itself including an attached file is transmitted to a destination via a protocol corresponding to the encryption of HTTPS and POP3S. In the case of encrypting electronic mail delivery using the SMTP protocol (STARTTLS, SMTP over SSL/TLS), it is difficult to fix the delivery server and the delivery does not necessarily go through a server that supports encryption. Therefore, delivery may be interrupted in the middle or delivery may be carried out in an unencrypted state.

In the delivery method of the present embodiment, communication from the storage server 300 to the authentication/relay server 400 is directly performed using HTTPS. Communication from the authentication/relay server 400 to the terminal 160 of the receiver R requires setting on the receiver side, but mail delivery by POP3S can be performed directly from the authentication/relay server 400. By interposing only the authentication/relay server 400 between the sender and the receiver, data transfer is performed without passing through a delivery server whose encryption correspondence is unclear.

According to the present embodiment, since the electronic mail is transferred as a single eml file (with the extension eml) regardless of the presence or absence of the attached file, the receiver can take in the eml file with the mailer he or she usually uses in the same manner as ordinary electronic mail and can read it. As in the first embodiment, when acquiring the attached file separated from an electronic mail, the receiver R needs to access the file relay server 170 from the browser of the terminal 160, but in the present embodiment, it is not necessary to use a mailer and a browser separately, so that convenience is improved. Since eml files are transferred via HTTPS and POP3S paths, security during transmission can be secured.

Further, since the authentication/relay server 400 deploys the eml file only in the dynamic memory, it becomes very difficult for a third party to illegally copy data held in the dynamic memory. In addition, by waiting for polling from the mailer of the receiver, the authentication/relay server 400 can immediately transmit the uploaded eml file to the mailer of the receiver, in other words, by shortening the time for which the authentication/relay server 400 existing on the Internet holds the eml file as much as possible, the risk of leakage due to unauthorized access by a third party is reduced.

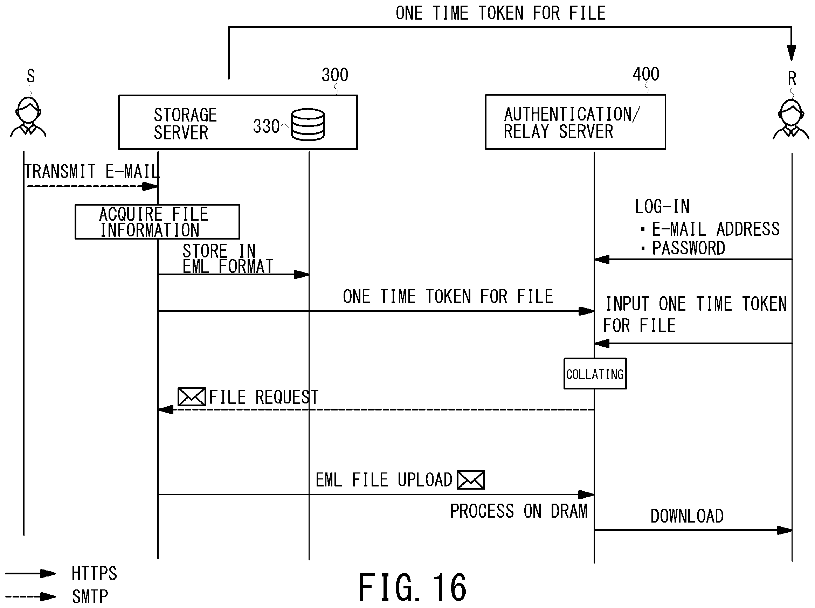

Next, a third embodiment of the present invention will be described. In the third embodiment, a token is used for linking the file to be downloaded with the receiver R. FIG. 16 is a flow for explaining the operation of downloading the eml file in the third embodiment. Similarly to the second embodiment, the storage server 300 stores electronic mail in eml format. Further, the storage server 300 transmits a one time token associated with the stored eml file to the receiver R and the authentication/relay server 400, respectively. The method of the transmission for one time token to the receiver R is not particularly limited, but for example, it is transmitted through a short message or another server. A one time token is simply a number, tag, or label attached to a file, which itself would not pose a security risk if leaked.

On the other hand, the receiver R logs in to the authentication/relay server 400 using own mail address and password. After log-in, a screen for inputting the one time token of the file is displayed in the browser or the dedicated application of the terminal 160 of the receiver R, and the receiver R inputs the one time token of the file.

If the one time token transmitted from the storage server 300 and the one time token inputted by the receiver R match, the authentication/relay server 400 determines that the combination of the one time token and the receiver R is valid, and transmits a file request to the sender associated with the one time token by SMTP.

When the storage server 300 receives the request from the authentication/relay server 400, the storage server 300 reads the eml file associated with the token in the request and transmits the eml file to the authentication/relay server 400 via HTTPS.

The authentication/relay server 400 transfers the received eml file to the account of the receiver R, and the receiver R downloads the eml file via an application such as a browser.

Thus, according to the third embodiment, by using a token for associating a file to be downloaded with a receiver, it is possible to perform file transfer with high security and flexibility. Although the third embodiment is applied to the case of downloading the eml file in the second embodiment, the present invention is not limited thereto, and the third embodiment can also be applied to the case of transferring an electronic mail and an attached file separately as in the first embodiment.

Although the preferred embodiments of the present invention have been described in detail above, the present invention is not limited to specific embodiments, and various modifications and changes can be made within the scope of the invention described in the claims.

### EXPLANATION OF REFERENCE NUMERALS

100, 100A, 100B, 100C: file transfer system
110, 160: terminal
120, 300: storage Server
130: Authentication Server
140: file Relay Server
150: mail Server
400: authentication/relay server
S: sender
R: receiver
NW1, NW2, NW3: network
M: electronic mail
F: attached file

## Claims

1. A file transfer system having a function of transferring a file attached to an electronic mail, the file transfer system comprising:
a sender side terminal for generating an electronic mail for transmitting to a destination address;
a receiver side terminal for receiving an electronic mail generated by the sender side terminal;
a first server for receiving the electronic mail from the sender side terminal, the first server identifying the presence or absence of an attached file of the electronic mail, storing the attached file if there is the attached file, and transmitting the electronic mail with the attached file separated to the receiver side terminal;
a second server for performing a second transfer request of the attached file to the first server in response to a first transfer request of the attached file from the receiver side terminal; and
a third server for receiving the attached file provided from the first server in response to the second transfer request from the second server and for transmitting the attached file to the receiver side terminal in response to a reception request from the receiver side terminal.

2. The file transfer system according to claim 1, wherein the second server notifies the first server of the second transfer request when the receiver side terminal is authenticated, and notifies the first server that the receiver side terminal is not authenticated when the receiver side terminal cannot be authenticated.

3. The file transfer system according to claim 2, wherein when the first server receives the notification that the receiver side terminal is not authenticated, the first server transmits an electronic mail containing a one time token for registration to the receiver side terminal.

4. The file transfer system according to claim 2, wherein when the destination address of the electronic mail received from the sender side terminal is not registered in the destination list, the first server transmits an electronic mail including the one time token for registration to the receiver side terminal.

5. The file transfer system according to claim 1, wherein the third server temporarily retains the attached file received from the first server in a dynamic memory without storing the attached file in a non-volatile storage medium.

6. The file transfer system according to claim 1, wherein the first server exists in a first network common to the sender side terminal, the second server and the third server exist in a second network different from the first network, and the receiver side terminal exists in a third network.

7. The file transfer system according to claim 6, wherein the first server permits access of only the second server with respect to access from outside the first network.

8. The file transfer system according to claim 6, wherein the third server permits access of only the first server with respect to access from outside the second network.

9. The file transfer system according to claim 1, wherein the receiver side terminal includes a common interface for accessing the second server and the third server, and wherein the common interface enables to input authentication information for logging in to the second server and the third server.

10. The file transfer system according to claim 1 or 6, wherein communication between the first server, the second server, and the third server is HTTPS, communication between the second server and the third server and the receiver side terminal is HTTPS, and communication between the first server and the receiver side terminal is SMTP.

11. A file transfer system having a function of transferring a file attached to an electronic mail, the file transfer system comprising:
a sender side terminal for generating an electronic mail for transmitting to a destination address;
a receiver side terminal for receiving an electronic mail generated by the sender side terminal;
a first server for receiving an electronic mail from the sender side terminal, the first server storing the electronic mail as a mail file having the same extension as the electronic mail, and outputting a transmission notification indicating that the electronic mail has been transmitted to the receiver side terminal; and
a second server for receiving the transmission notification and for requesting the first server to transfer the mail file when receiving a reception request of the electronic mail from the receiver side terminal,
wherein the second server transmits the mail file received from the first server to the receiver side terminal as an electronic mail.

12. The file transfer system according to claim 11, wherein when a file is attached to the electronic mail from the sender side terminal, the first server saves the electronic mail including the attached file as a single mail file.

13. The receiving terminal apparatus according to claim 11, wherein the receiver side terminal performs the reception request of the electronic mail to the second server at a predetermined time interval by a polling function,
and wherein when the second server receives the reception request from the receiver side terminal, the second server requests the first server to transfer the mail file in a state in which the reception request is made to wait, and transmits the mail file received from the first server as the response to the reception request made to wait.

14. The file transfer system according to claim 11 or 13, wherein the communication between the receiver side terminal and the second server is POP3 or POP3S.

15. The file transfer system according to claim 11, wherein the receiver side terminal takes the mail file received from the second server into a mailer and reads the mail file as an electronic mail.

16. The file transfer system according to claim 11, wherein the second server makes the transfer request of the mail file to the first server by SMTP.

17. The file transfer system according to claim 11, wherein the transmission notification from the first server to the second server and the transfer of the mail file from the first server to the second server are performed by HTTPS.

18. The file transfer system according to claim 11, wherein the second server temporarily stores the mail file in a dynamic memory without storing the mail file in a non-volatile storage medium.
